# EUROPEAN PATENT APPLICATION

(11) **EP 4 280 080 A1**
(43) Date of publication of application: **22.11.2023**
(21) Application number: 23173494.8
(22) Date of filing: 15.05.2023
(51) Int. Cl.: G06F 16/84

(54) **METHOD AND SYSTEM FOR VEHICLE UNIQUE SIGNAL TO VEHICLE GENERAL SIGNAL MATCHING**

(30) Priority: 16.05.2022 US 202263342202 P; 09.05.2023 US 202318144928
(71) Applicant: Volvo Car Corporation, 405 31 Göteborg (SE)
(72) Inventor: WINZELL, Peter, 40531 Göteborg (SE)
(74) Representative: Maiwald GmbH

(57) **Abstract**

A method and system for vehicle unique signal to vehicle general signal matching, such that proprietary vehicle signals can be mapped and translated to corresponding Vehicle Signal Specification (VSS) signals or the like, facilitating all types of connected vehicle functionalities. A candidate ranking algorithm is based on the lexical elements of signal names and their semantic descriptions. Furthermore, units and data types may also be used to further enhance candidate suggestions. For candidate storage and generation, a knowledge graph using a graph database is suggested. Methods for automatic translation code generation are also suggested, which occurs when a one-to-one mapping is lacking. The algorithms may be implanted in vehicle or in the cloud, and mappings may be constrained to a schema dictated by a given use case, or may be more extensive and cached for future use.

## Description

### TECHNICAL FIELD

The present disclosure relates generally to the automotive field. More particularly, the present disclosure relates to a method and system for vehicle unique signal to vehicle general signal matching.

### BACKGROUND

Modern connected vehicle networks handle several thousand different data signals, such as wheel pulses, battery levels, locations, window positions etc. Vehicle data and the corresponding identifications have often been a proprietary original equipment manufacturer (OEM) concern and anyone trying to interface vehicle data across OEMs has had to confront this situation. New use cases stemming from autonomous vehicles, smart cities, and various connected services raise a daunting matching task across OEMs. Various web and vehicle-focused groups and consortiums have together attempted to resolve this by proposing web standards for vehicle signal data. These standards facilitate data handling and promote innovation in the vehicle data space. However, it is still necessary to map OEM signals to these standards, such as the Vehicle Signal Specification (VSS).

The present background is provided as illustrative environmental context only and should not be construed to be limiting in any manner. It will be readily apparent to those of ordinary skill in the art that the principles and concepts of the present disclosure may be applied in other environments and applications equally, without limitation.

### SUMMARY

The present disclosure generally provides a method and system for vehicle unique signal to vehicle general signal matching, such that proprietary vehicle signals can be mapped and translated to corresponding VSS signals or the like, facilitating all types of connected vehicle functionalities. The present disclosure provides a candidate ranking algorithm based on the lexical elements of signal names and their semantic descriptions. Furthermore, units and data types may also be used to further enhance candidate suggestions. For candidate storage and generation, a knowledge graph using a graph database is suggested. Methods for automatic translation code generation are also suggested, which occurs when a one-to-one mapping is lacking. The algorithms of the present disclosure may be implanted in vehicle or in the cloud, and mappings may be constrained to a schema dictated by a given use case, or may be more extensive and cached for future use.

In one illustrative embodiment, the present disclosure provides a method for vehicle unique signal to vehicle general signal matching, the method including: using translation instructions stored in a memory and executed by a processor of a vehicle or resident in a cloud network, receiving a vehicle signal identifier associated with a signal of a vehicle and mapping the vehicle signal identifier to a corresponding specification signal identifier associated with an external standard, where the mapping is performed using a matching and scoring algorithm utilizing multiple attributes of the vehicle signal identifier and the specification signal identifier selected from signal name, signal descriptive text, signal units, and signal data type. The vehicle signal is received based on a vehicle identification that defines a plurality of extracted candidate vehicle signals. The vehicle signal is also received based on a specified use case providing a schema associated with the vehicle signal that defines a plurality of extracted candidate vehicle signals. The method also includes caching a result of the mapping in a database stored in the memory of the vehicle or resident in the cloud for future use. The method further includes, based on a result of the mapping, providing the vehicle signal to an external entity identifying the vehicle signal using the specification signal identifier. The matching and scoring algorithm is operable for assessing a Levenshtein or similar distance modified to fit signal name mapping between a signal name of the vehicle signal identifier and a signal name of the specification signal identifier. The matching and scoring algorithm is operable for assessing a similarity between signal descriptive text of the vehicle signal identifier and signal descriptive text of the specification signal identifier using a machine learning model trained with automotive language and terminology, for example. The matching and scoring algorithm is operable for assessing a similarity between signal units of the vehicle signal identifier and signal units of the specification signal identifier using a heuristic matching algorithm. The matching and scoring algorithm is operable for assessing a similarity between a signal data type of the vehicle signal identifier and a signal data type of the specification signal identifier using a data structure matching algorithm. Data types are matched based on information such as bit length, integers, floating point numbers, and strings. The matching and scoring algorithm is operable for weighting mapping results associated with each of the multiple attributes of the vehicle signal identifier and the specification signal identifier.

In another illustrative embodiment, the present disclosure provides a system for vehicle unique signal to vehicle general signal matching, the system including: a memory of a vehicle or resident in a cloud network; a processor of the vehicle or resident in the cloud network; and translation instructions stored in the memory and executed by the processor of the vehicle or resident in the cloud network operable for receiving a vehicle signal identifier associated with a signal of a vehicle and mapping the vehicle signal identifier to a corresponding specification signal identifier associated with an external standard, where the mapping is performed using a matching and scoring algorithm utilizing multiple attributes of the vehicle signal identifier and the specification signal identifier selected from signal name, signal descriptive text, signal units, and signal data type. The vehicle signal is received based on a vehicle identification that defines a plurality of extracted candidate vehicle signals. The vehicle signal is also received based on a specified use case providing a schema associated with the vehicle signal that defines a plurality of extracted candidate vehicle signals. The memory further caches a result of the mapping in a database stored in the memory of the vehicle or resident in the cloud for future use. Based on a result of the mapping, the processor further provides the vehicle signal to an external entity identifying the vehicle signal using the specification signal identifier. The matching and scoring algorithm is operable for assessing a Levenshtein or similar distance modified to fit signal name mapping between a signal name of the vehicle signal identifier and a signal name of the specification signal identifier. The matching and scoring algorithm is operable for assessing a similarity between signal descriptive text of the vehicle signal identifier and signal descriptive text of the specification signal identifier using a machine learning model trained with automotive language and terminology, for example. The matching and scoring algorithm is operable for assessing a similarity between signal units of the vehicle signal identifier and signal units of the specification signal identifier using a heuristic matching algorithm. The matching and scoring algorithm is operable for assessing a similarity between a signal data type of the vehicle signal identifier and a signal data type of the specification signal identifier using a data structure matching algorithm. Data types are matched based on information such as bit length, integers, floating point numbers, and strings. The matching and scoring algorithm is operable for weighting mapping results associated with each of the multiple attributes of the vehicle signal identifier and the specification signal identifier.

In a further illustrative embodiment, the present disclosure provides a non-transitory computer-readable medium including a memory storing translation instructions executed by a processor of a vehicle or resident in a cloud network for carrying out steps for vehicle unique signal to vehicle general signal matching, the steps including: receiving a vehicle signal identifier associated with a signal of a vehicle and mapping the vehicle signal identifier to a corresponding specification signal identifier associated with an external standard, where the mapping is performed using a matching and scoring algorithm utilizing multiple attributes of the vehicle signal identifier and the specification signal identifier selected from signal name, signal descriptive text, signal units, and signal data type.

### BRIEF DESCRIPTION OF THE DRAWINGS

The present disclosure is illustrated and described herein with reference to the various drawings, in which like reference numbers are used to denote like system components/method steps, as appropriate, and in which:
FIG. 1 is a schematic diagram illustrating the problem solved by the present disclosure;
FIG. 2 is a schematic diagram illustrating one embodiment of the signal translation system of the present disclosure;

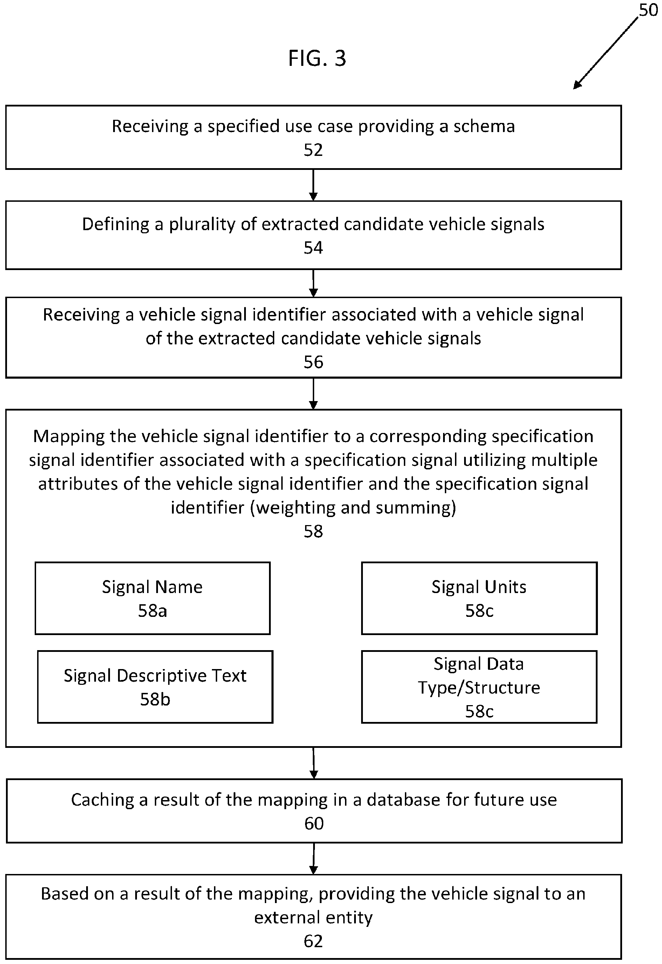

FIG. 3 is a schematic diagram illustrating one embodiment of the signal translator method of the present disclosure;
FIG. 4 is a network diagram of a cloud-based environment for implementing various cloud-based services of the present disclosure;
FIG. 5 is a block diagram of a server that may be used stand-alone, in a networked environment, or in the cloud-based system of FIG. 4; and
FIG. 6 is a block diagram of a user device that may be used in a connected environment or the cloud-based system of FIG. 4.

It will be readily apparent to those of ordinary skill in the art that aspects of any disclosed embodiment may be included, omitted, and/or combined in any other disclosed embodiment as desired in a given application.

### DETAILED DESCRIPTION

Again, the present disclosure generally provides a method and system for vehicle unique signal to vehicle general signal matching, such that proprietary vehicle signals can be mapped and translated to corresponding VSS signals or the like, facilitating all types of connected vehicle functionalities. The present disclosure provides a candidate ranking algorithm based on the lexical elements of signal names and their semantic descriptions. Furthermore, units and data types may also be used to further enhance candidate suggestions. For candidate storage and generation, a knowledge graph using a graph database is suggested. Methods for automatic translation code generation are also suggested, which occurs when a one-to-one mapping is lacking. The algorithms of the present disclosure may be implanted in vehicle or in the cloud, and mappings may be constrained to a schema dictated by a given use case, or may be more extensive and cached for future use.

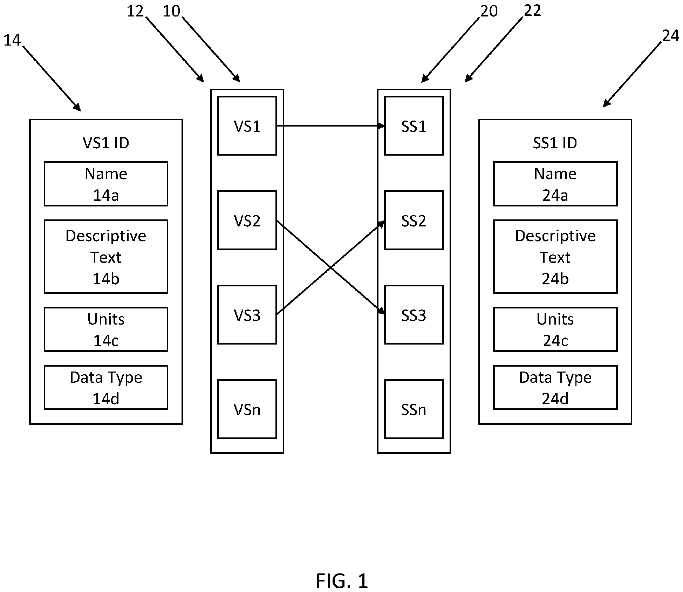

FIG. 1 is a schematic diagram illustrating the problem solved by the present disclosure. Contrary to the present disclosure, current conventional wisdom demands a manual mapping signal-for-signal between vehicle signals, which may be proprietary and standards-based signals. As illustrated in FIG. 1, a vehicle 10 has multiple vehicle signals 12 associated with it, such as signals generated/collected by on-board sensors and controls. There may be hundreds or thousands of such signals. Examples include speed signals, battery signals, equipment signals, environmental signals, setting signals, operational state signals, etc. It is often desirable to access these vehicle signals 12, which, again, may be proprietary, from an external system 20, such as another vehicle, a web interface, a network interface, a proprietary interface, an infrastructure interface, etc. Typically, such external system 20 identifies the signals with corresponding functions or meanings as specification signals 22 based on the VSS or the like, as the proprietary information may not be available to the external system 20. Thus, it is desired to map the vehicle signals 12 associated with the vehicle 20 to the specification signals 22 used by the external system 20. As illustrated, the vehicle signals 12 typically each have a vehicle signal identifier 14 including name 14a, descriptive text 14b, units 14c, and data type 14d. Similarly, the specification signals 22 typically each have a specification signal identifier 24 including name 24a, descriptive text 24b, units 24c, and data type 24d. These names 14a and 24a, descriptive texts 14b and 24b, units 14c and 24c, and data types 14d and 24d may vary based on the proprietary/public dichotomy referenced herein. Thus, the present disclosure provides a translation and mapping algorithm that maps the vehicle signals 12 to the specification signals 22 using the vehicle signal identifiers 14 and the specification signal identifiers 24.

In general, the names 14a and 24a include simple one word/phrase or title labels for the associated signals 12 and 22. An illustrative example includes the use of VehSpd for a vehicle speed signal for the vehicle 10, with the use of Vehicle. Speed for the corresponding vehicle speed signal for the external system 20. The descriptive texts 14b and 24b include simple text passages for the associated signals 12 and 22. The units 14c and 24c include the nature of the units used for the associated signals 12 and 22. An illustrative example includes the use of m/s for the vehicle speed signal for the vehicle 10, with the use of km/h for the corresponding vehicle speed signal for the external system 20. Finally, the data types 14d and 24d include the data structures used for the associated signals 12 and 22. An illustrative example includes the use of (time) : (speed) for the vehicle speed signal for the vehicle 10, with the use of (time-speed) for the corresponding vehicle speed signal for the external system 20. Another illustrative example includes the use of a string for the vehicle speed signal for the vehicle 10, with the use of an integer for the corresponding vehicle speed signal for the external system 20. It will be readily apparent to those of ordinary skill in the art that these are very simple illustrative examples only, intended to clarify the functionalities of the present disclosure, without being limiting in any manner.

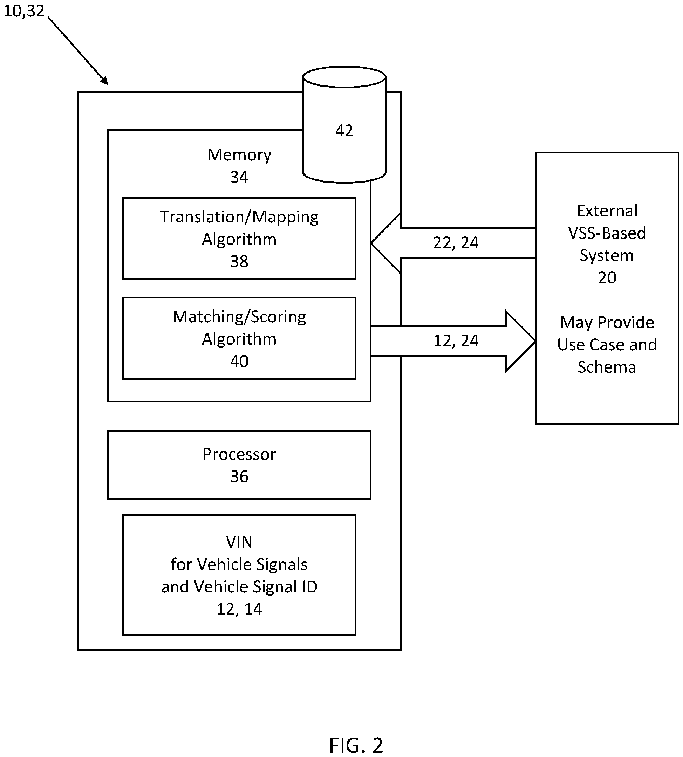

FIG. 2 is a schematic diagram illustrating one embodiment of the signal translation system 30 of the present disclosure. The system 30 includes, within the vehicle 10 or a cloud network 32, a memory 34 and a processor 36. Stored in the memory 34 and executed by the processor 36 is a translation and mapping algorithm 38 operable for receiving a vehicle signal identifier 14 associated with a vehicle signal 12 and mapping the vehicle signal identifier 14 to a corresponding specification signal identifier 24 associated with a specification signal 22, where the mapping is performed using a matching and scoring algorithm 40 utilizing multiple attributes of the vehicle signal identifier 14 and the specification signal identifier 24 selected from the signal name 14a and 24a, the signal descriptive text 14b and 24b, the signal units 14c and 24c, and the signal data type 14d and 24d. Results based on each of the attributes may be weighted and summed or otherwise combined to arrive at a final mapping. The vehicle signal 12 is received based on a vehicle identification (VIN) that defines a plurality of extracted candidate vehicle signals for that vehicle, with that configuration, in that year, etc. The vehicle signal 12 is also received based on a specified use case providing a schema associated with the vehicle signal 12 that defines a plurality of extracted candidate vehicle signals. For example, the external system 20 may request heating-ventilation-and-air conditioning (HVAC)-related vehicle signals 12. This use case provides a schema for the vehicle 10 to extract only and all of the relevant vehicle signals 12 and vehicle signal identifiers 14, which are subsequently translated/mapped.

Optionally, the memory 34 caches a result of the mapping in a database 42 stored in the memory 34 of the vehicle 10 or resident in the cloud 32 for future use. In this manner, mapping can be performed on an as needed basis or on a preparatory basis. Based on a result of the mapping, the processor 36 further provides the vehicle signal 12 to the external entity 20 identifying the vehicle signal 12 using the specification signal identifier 24, for example.

The matching and scoring algorithm 40 is operable for parsing or assessing a Levenshtein or similar distance modified to fit signal name mapping between a signal name 14a of the vehicle signal identifier 14 and a signal name 24a of the specification signal identifier 24. The matching and scoring algorithm 40 is also operable for assessing a similarity between signal descriptive text 14b of the vehicle signal identifier 14 and signal descriptive text 24b of the specification signal identifier 24 using a machine learning model trained with automotive language and terminology, for example. The matching and scoring algorithm 40 is further operable for assessing a similarity between signal units 14c of the vehicle signal identifier 14 and signal units 24c of the specification signal identifier 24 using a heuristic matching algorithm. The matching and scoring algorithm 40 is still further operable for assessing a similarity between a signal data type 14d of the vehicle signal identifier 14 and a signal data type 24d of the specification signal identifier 24 using a data structure matching algorithm. Data types are matched based on information such as bit length, integers, floating point numbers, and strings. It will be readily apparent to those of ordinary skill in the art that a multitude of tools could be used to perform each of these operations and all are contemplated herein, without limitation.

FIG. 2 is a schematic diagram illustrating one embodiment of the signal translation method 50 of the present disclosure. The method 50 includes, within the vehicle 10 or a cloud network 32 using a memory 34 and a processor 36, executing a translation and mapping algorithm 38 operable for receiving a vehicle signal identifier 14 associated with a vehicle signal 12 (step 56) and mapping the vehicle signal identifier 14 to a corresponding specification signal identifier 24 associated with a specification signal 22 (step 58), where the mapping is performed using a matching and scoring algorithm 40 utilizing multiple attributes of the vehicle signal identifier 14 and the specification signal identifier 24 selected from the signal name 14a and 24a, the signal descriptive text 14b and 24b, the signal units 14c and 24c, and the signal data type 14d and 24d. Results based on each of the attributes may be weighted and summed or otherwise combined to arrive at a final mapping. The vehicle signal 12 is received based on a VIN that defines a plurality of extracted candidate vehicle signals for that vehicle, with that configuration, in that year, etc. The vehicle signal 12 is also received based on a specified use case providing a schema associated with the vehicle signal 12 (step 52) that defines a plurality of extracted candidate vehicle signals (step 54). For example, the external system 20 may request heating-ventilation-and-air conditioning (HVAC)-related vehicle signals 12. This use case provides a schema for the vehicle 10 to extract only and all of the relevant vehicle signals 12 and vehicle signal identifiers 14, which are subsequently translated/mapped.

Optionally, the memory 34 caches a result of the mapping in a database 42 stored in the memory 34 of the vehicle 10 or resident in the cloud 32 for future use (step 60). In this manner, mapping can be performed on an as needed basis or on a preparatory basis. Based on a result of the mapping, the processor 36 further provides the vehicle signal 12 to the external entity 20 identifying the vehicle signal 12 using the specification signal identifier 24, for example (step 62).

The matching and scoring algorithm 40 is operable for parsing or assessing a Levenshtein or similar distance modified to fit signal name mapping between a signal name 14a of the vehicle signal identifier 14 and a signal name 24a of the specification signal identifier 24 (step 58a). The matching and scoring algorithm 40 is also operable for assessing a similarity between signal descriptive text 14b of the vehicle signal identifier 14 and signal descriptive text 24b of the specification signal identifier 24 using a machine learning model trained with automotive language and terminology, for example (step 58b). The matching and scoring algorithm 40 is further operable for assessing a similarity between signal units 14c of the vehicle signal identifier 14 and signal units 24c of the specification signal identifier 24 using a heuristic matching algorithm (step 58c). The matching and scoring algorithm 40 is still further operable for assessing a similarity between a signal data type 14d of the vehicle signal identifier 14 and a signal data type 24d of the specification signal identifier 24 using a data structure matching algorithm (step 58d). Data types are matched based on information such as bit length, integers, floating point numbers, and strings. It will be readily apparent to those of ordinary skill in the art that a multitude of tools could be used to perform each of these operations and all are contemplated herein, without limitation.

It is to be recognized that, depending on the example, certain acts or events of any of the techniques described herein can be performed in a different sequence, may be added, merged, or left out altogether (e.g., not all described acts or events are necessary for the practice of the techniques). Moreover, in certain examples, acts or events may be performed concurrently, e.g., through multi-threaded processing, interrupt processing, or multiple processors, rather than sequentially.

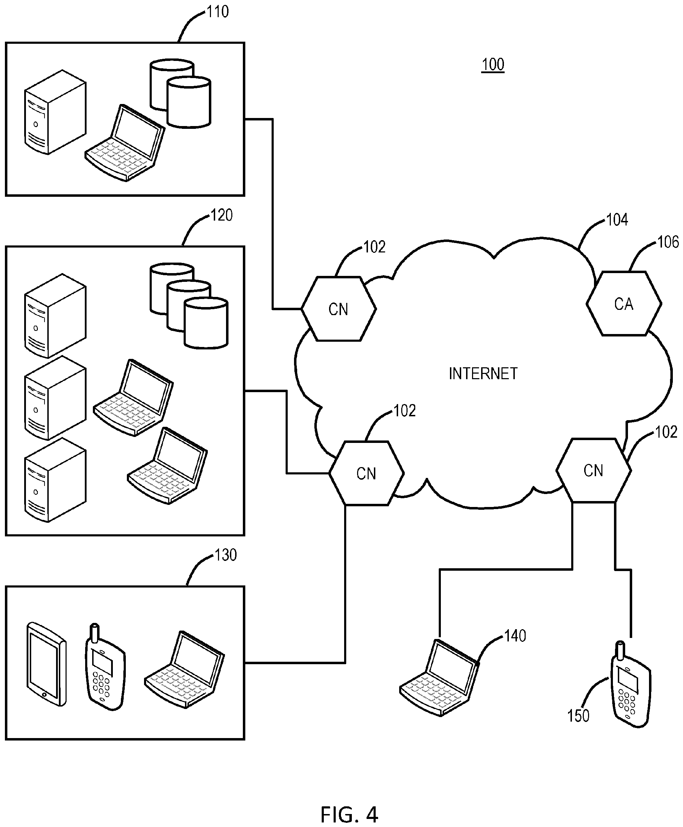

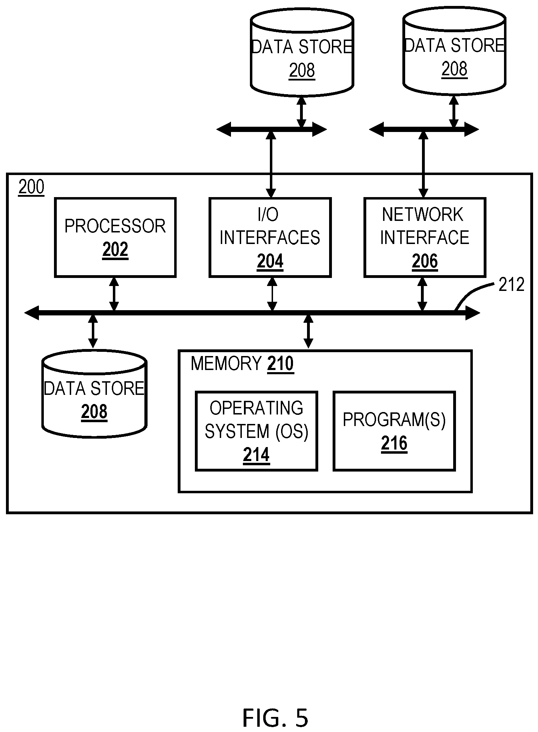

FIG. 4 is a network diagram of a cloud-based system 100 for implementing various cloud-based services of the present disclosure. The cloud-based system 100 includes one or more cloud nodes (CNs) 102 communicatively coupled to the Internet 104 or the like. The cloud nodes 102 may be implemented as a server 200 (as illustrated in FIG. 5) or the like and can be geographically diverse from one another, such as located at various data centers around the country or globe. Further, the cloud-based system 100 can include one or more central authority (CA) nodes 106, which similarly can be implemented as the server 200 and be connected to the CNs 102. For illustration purposes, the cloud-based system 100 can connect to a regional office 110, headquarters 120, various employee's homes 130, laptops/desktops 140, and mobile devices 150, each of which can be communicatively coupled to one of the CNs 102. These locations 110, 120, and 130, and devices 140 and 150 are shown for illustrative purposes, and those skilled in the art will recognize there are various access scenarios to the cloud-based system 100, all of which are contemplated herein. The devices 140 and 150 can be so-called road warriors, i.e., users off-site, on-the-road, etc. The cloud-based system 100 can be a private cloud, a public cloud, a combination of a private cloud and a public cloud (hybrid cloud), or the like.

The cloud-based system 100 can provide any functionality through services such as software-as-a-service (SaaS), platform-as-a-service, infrastructure-as-a-service, security-as-a-service, Virtual Network Functions (VNFs) in a Network Functions Virtualization (NFV) Infrastructure (NFVI), etc. to the locations 110, 120, and 130 and devices 140 and 150. Previously, the Information Technology (IT) deployment model included enterprise resources and applications stored within an enterprise network (i.e., physical devices), behind a firewall, accessible by employees on site or remote via Virtual Private Networks (VPNs), etc. The cloud-based system 100 is replacing the conventional deployment model. The cloud-based system 100 can be used to implement these services in the cloud without requiring the physical devices and management thereof by enterprise IT administrators.

Cloud computing systems and methods abstract away physical servers, storage, networking, etc., and instead offer these as on-demand and elastic resources. The National Institute of Standards and Technology (NIST) provides a concise and specific definition which states cloud computing is a model for enabling convenient, on-demand network access to a shared pool of configurable computing resources (e.g., networks, servers, storage, applications, and services) that can be rapidly provisioned and released with minimal management effort or service provider interaction. Cloud computing differs from the classic client-server model by providing applications from a server that are executed and managed by a client's web browser or the like, with no installed client version of an application necessarily required. Centralization gives cloud service providers complete control over the versions of the browser-based and other applications provided to clients, which removes the need for version upgrades or license management on individual client computing devices. The phrase "software as a service" (SaaS) is sometimes used to describe application programs offered through cloud computing. A common shorthand for a provided cloud computing service (or even an aggregation of all existing cloud services) is "the cloud." The cloud-based system 100 is illustrated herein as one example embodiment of a cloud-based system, and those of ordinary skill in the art will recognize the systems and methods described herein are not necessarily limited thereby.

FIG. 5 is a block diagram of a server 200, which may be used in the cloud-based system 100 (FIG. 4), in other networked systems, or stand-alone. For example, the CNs 102 (FIG. 4) and the central authority nodes 106 (FIG. 4) may be formed as one or more of the servers 200. The server 200 may be a digital computer that, in terms of hardware architecture, generally includes a processor 202, input/output (I/O) interfaces 204, a network interface 206, a data store 208, and memory 210. It should be appreciated by those of ordinary skill in the art that FIG. 5 depicts the server 200 in an oversimplified manner, and a practical embodiment may include additional components and suitably configured processing logic to support known or conventional operating features that are not described in detail herein. The components (202, 204, 206, 208, and 210) are communicatively coupled via a local interface 212. The local interface 212 may be, for example, but is not limited to, one or more buses or other wired or wireless connections, as is known in the art. The local interface 212 may have additional elements, which are omitted for simplicity, such as controllers, buffers (caches), drivers, repeaters, and receivers, among many others, to enable communications. Further, the local interface 212 may include address, control, and/or data connections to enable appropriate communications among the aforementioned components.

The processor 202 is a hardware device for executing software instructions. The processor 202 may be any custom made or commercially available processor, a central processing unit (CPU), an auxiliary processor among several processors associated with the server 200, a semiconductor-based microprocessor (in the form of a microchip or chipset), or generally any device for executing software instructions. When the server 200 is in operation, the processor 202 is configured to execute software stored within the memory 210, to communicate data to and from the memory 210, and to generally control operations of the server 200 pursuant to the software instructions. The I/O interfaces 204 may be used to receive user input from and/or for providing system output to one or more devices or components.

The network interface 206 may be used to enable the server 200 to communicate on a network, such as the Internet 104 (FIG. 4). The network interface 206 may include, for example, an Ethernet card or adapter (e.g., 10BaseT, Fast Ethernet, Gigabit Ethernet, or 10GbE) or a Wireless Local Area Network (WLAN) card or adapter (e.g., 802.11a/b/g/n/ac). The network interface 206 may include address, control, and/or data connections to enable appropriate communications on the network. A data store 208 may be used to store data. The data store 208 may include any of volatile memory elements (e.g., random access memory (RAM, such as DRAM, SRAM, SDRAM, and the like)), nonvolatile memory elements (e.g., ROM, hard drive, tape, CDROM, and the like), and combinations thereof. Moreover, the data store 208 may incorporate electronic, magnetic, optical, and/or other types of storage media. In one example, the data store 208 may be located internal to the server 200, such as, for example, an internal hard drive connected to the local interface 212 in the server 200. Additionally, in another embodiment, the data store 208 may be located external to the server 200 such as, for example, an external hard drive connected to the I/O interfaces 204 (e.g., a SCSI or USB connection). In a further embodiment, the data store 208 may be connected to the server 200 through a network, such as, for example, a network-attached file server.

The memory 210 may include any of volatile memory elements (e.g., random access memory (RAM, such as DRAM, SRAM, SDRAM, etc.)), nonvolatile memory elements (e.g., ROM, hard drive, tape, CDROM, etc.), and combinations thereof. Moreover, the memory 210 may incorporate electronic, magnetic, optical, and/or other types of storage media. Note that the memory 210 may have a distributed architecture, where various components are situated remotely from one another but can be accessed by the processor 202. The software in memory 210 may include one or more software programs, each of which includes an ordered listing of executable instructions for implementing logical functions. The software in the memory 210 includes a suitable operating system (O/S) 214 and one or more programs 216. The operating system 214 essentially controls the execution of other computer programs, such as the one or more programs 216, and provides scheduling, input-output control, file and data management, memory management, and communication control and related services. The one or more programs 216 may be configured to implement the various processes, algorithms, methods, techniques, etc. described herein.

It will be appreciated that some embodiments described herein may include one or more generic or specialized processors ("one or more processors") such as microprocessors; central processing units (CPUs); digital signal processors (DSPs); customized processors such as network processors (NPs) or network processing units (NPUs), graphics processing units (GPUs), or the like; field programmable gate arrays (FPGAs); and the like along with unique stored program instructions (including both software and firmware) for control thereof to implement, in conjunction with certain nonprocessor circuits, some, most, or all of the functions of the methods and/or systems described herein. Alternatively, some or all functions may be implemented by a state machine that has no stored program instructions, or in one or more application-specific integrated circuits (ASICs), in which each function or some combinations of certain of the functions are implemented as custom logic or circuitry. Of course, a combination of the aforementioned approaches may be used. For some of the embodiments described herein, a corresponding device in hardware and optionally with software, firmware, and a combination thereof can be referred to as "circuitry configured or adapted to," "logic configured or adapted to," etc. perform a set of operations, steps, methods, processes, algorithms, functions, techniques, etc. on digital and/or analog signals as described herein for the various embodiments.

Moreover, some embodiments may include a non-transitory computer-readable storage medium having computer-readable code stored thereon for programming a computer, server, appliance, device, processor, circuit, etc. each of which may include a processor to perform functions as described and claimed herein. Examples of such computer-readable storage mediums include, but are not limited to, a hard disk, an optical storage device, a magnetic storage device, a Read-Only Memory (ROM), a Programmable Read-Only Memory (PROM), an Erasable Programmable Read-Only Memory (EPROM), an Electrically Erasable Programmable Read-Only Memory (EEPROM), flash memory, and the like. When stored in the non-transitory computer-readable medium, software can include instructions executable by a processor or device (e.g., any type of programmable circuitry or logic) that, in response to such execution, cause a processor or the device to perform a set of operations, steps, methods, processes, algorithms, functions, techniques, etc. as described herein for the various embodiments.

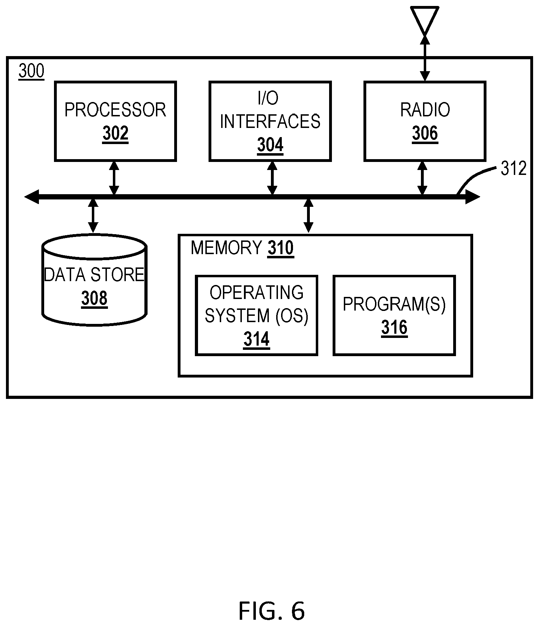

FIG. 6 is a block diagram of a user device 300, which may be used in the cloud-based system 100 (FIG. 4) or the like. Again, the user device 300 can be a smartphone, a tablet, a smartwatch, an Internet of Things (IoT) device, a laptop, a virtual reality (VR) headset, etc. The user device 300 can be a digital device that, in terms of hardware architecture, generally includes a processor 302, I/O interfaces 304, a radio 306, a data store 308, and memory 310. It should be appreciated by those of ordinary skill in the art that FIG. 6 depicts the user device 300 in an oversimplified manner, and a practical embodiment may include additional components and suitably configured processing logic to support known or conventional operating features that are not described in detail herein. The components (302, 304, 306, 308, and 310) are communicatively coupled via a local interface 312. The local interface 312 can be, for example, but is not limited to, one or more buses or other wired or wireless connections, as is known in the art. The local interface 312 can have additional elements, which are omitted for simplicity, such as controllers, buffers (caches), drivers, repeaters, and receivers, among many others, to enable communications. Further, the local interface 312 may include address, control, and/or data connections to enable appropriate communications among the aforementioned components.

The processor 302 is a hardware device for executing software instructions. The processor 302 can be any custom made or commercially available processor, a CPU, an auxiliary processor among several processors associated with the user device 300, a semiconductor-based microprocessor (in the form of a microchip or chipset), or generally any device for executing software instructions. When the user device 300 is in operation, the processor 302 is configured to execute software stored within the memory 310, to communicate data to and from the memory 310, and to generally control operations of the user device 300 pursuant to the software instructions. In an embodiment, the processor 302 may include a mobile optimized processor such as optimized for power consumption and mobile applications. The I/O interfaces 304 can be used to receive user input from and/or for providing system output. User input can be provided via, for example, a keypad, a touch screen, a scroll ball, a scroll bar, buttons, a barcode scanner, and the like. System output can be provided via a display device such as a liquid crystal display (LCD), touch screen, and the like.

The radio 306 enables wireless communication to an external access device or network. Any number of suitable wireless data communication protocols, techniques, or methodologies can be supported by the radio 306, including any protocols for wireless communication. The data store 308 may be used to store data. The data store 308 may include any of volatile memory elements (e.g., random access memory (RAM, such as DRAM, SRAM, SDRAM, and the like)), nonvolatile memory elements (e.g., ROM, hard drive, tape, CDROM, and the like), and combinations thereof. Moreover, the data store 308 may incorporate electronic, magnetic, optical, and/or other types of storage media.

Again, the memory 310 may include any of volatile memory elements (e.g., random access memory (RAM, such as DRAM, SRAM, SDRAM, etc.)), nonvolatile memory elements (e.g., ROM, hard drive, etc.), and combinations thereof. Moreover, the memory 310 may incorporate electronic, magnetic, optical, and/or other types of storage media. Note that the memory 310 may have a distributed architecture, where various components are situated remotely from one another, but can be accessed by the processor 302. The software in memory 310 can include one or more software programs, each of which includes an ordered listing of executable instructions for implementing logical functions. In the example of FIG. 6, the software in the memory 310 includes a suitable operating system 314 and programs 316. The operating system 314 essentially controls the execution of other computer programs and provides scheduling, input-output control, file and data management, memory management, and communication control and related services. The programs 316 may include various applications, add-ons, etc. configured to provide end user functionality with the user device 300. For example, example programs 316 may include, but not limited to, a web browser, social networking applications, streaming media applications, games, mapping and location applications, electronic mail applications, financial applications, and the like. In a typical example, the end-user typically uses one or more of the programs 316 along with a network such as the cloud-based system 100 (FIG. 4).

Although the present disclosure is illustrated and described herein with reference to illustrative embodiments and specific examples thereof, it will be readily apparent to those of ordinary skill in the art that other illustrative embodiments and examples may perform similar functions and/or achieve like results. All such equivalent illustrative embodiments and examples are within the spirit and scope of the present disclosure, are contemplated thereby, and are intended to be covered by the following non-limiting claims for all purposes.

## Claims

1. A method for vehicle unique signal to vehicle general signal matching, the method comprising:
using translation instructions stored in a memory and executed by a processor of a vehicle or resident in a cloud network, receiving a vehicle signal identifier associated with a signal of a vehicle and mapping the vehicle signal identifier to a corresponding specification signal identifier associated with an external standard, wherein the mapping is performed using a matching and scoring algorithm utilizing multiple attributes of the vehicle signal identifier and the specification signal identifier selected from signal name, signal descriptive text, signal units, and signal data type.

2. The method of claim 1, wherein the vehicle signal is received based on one or more of:
a vehicle identification that defines a plurality of extracted candidate vehicle signals; and
a specified use case providing a schema associated with the vehicle signal that defines a plurality of extracted candidate vehicle signals.

3. The method of claim 1 or 2, further comprising, based on a result of the mapping, providing the vehicle signal to an external entity identifying the vehicle signal using the specification signal identifier.

4. The method of any of the previous claims, wherein the matching and scoring algorithm is operable for assessing a Levenshtein distance modified to fit signal name mapping between a signal name of the vehicle signal identifier and a signal name of the specification signal identifier.

5. The method of any of the previous claims, wherein the matching and scoring algorithm is operable for assessing a similarity between signal descriptive text of the vehicle signal identifier and signal descriptive text of the specification signal identifier using a machine learning model trained with automotive language.

6. The method of any of the previous claims, wherein the matching and scoring algorithm is operable for assessing a similarity between signal units of the vehicle signal identifier and signal units of the specification signal identifier using a heuristic matching algorithm.

7. The method of any of the previous claims, wherein the matching and scoring algorithm is operable for assessing a similarity between a signal data type of the vehicle signal identifier and a signal data type of the specification signal identifier using a data structure matching algorithm.

8. The method of any of the previous claims, wherein the matching and scoring algorithm is operable for weighting mapping results associated with each of the multiple attributes of the vehicle signal identifier and the specification signal identifier.

9. A system for vehicle unique signal to vehicle general signal matching, the system comprising:
a memory of a vehicle or resident in a cloud network;
a processor of the vehicle or resident in the cloud network; and
translation instructions stored in the memory and executed by the processor of the vehicle or resident in the cloud network operable for receiving a vehicle signal identifier associated with a signal of a vehicle and mapping the vehicle signal identifier to a corresponding specification signal identifier associated with an external standard, wherein the mapping is performed using a matching and scoring algorithm utilizing multiple attributes of the vehicle signal identifier and the specification signal identifier selected from signal name, signal descriptive text, signal units, and signal data type.

10. The system of claim 9, wherein the vehicle signal is received based on one or more of:
a vehicle identification that defines a plurality of extracted candidate vehicle signals; and
a specified use case providing a schema associated with the vehicle signal that defines a plurality of extracted candidate vehicle signals.

11. The system of any of claims 9 to 10, based on a result of the mapping, the processor further providing the vehicle signal to an external entity identifying the vehicle signal using the specification signal identifier.

12. The system of any of claims 9 to 11, wherein the matching and scoring algorithm is operable for assessing a Levenshtein distance modified to fit signal name mapping between a signal name of the vehicle signal identifier and a signal name of the specification signal identifier.

13. The system of any of claims 9 to 12, wherein the matching and scoring algorithm is operable for assessing a similarity between signal descriptive text of the vehicle signal identifier and signal descriptive text of the specification signal identifier using a machine learning model trained with automotive language.

14. The system of any of claims 9 to 13, wherein the matching and scoring algorithm is operable for assessing a similarity between signal units of the vehicle signal identifier and signal units of the specification signal identifier using a heuristic matching algorithm.

15. The system of any of claims 9 to 14,
wherein the matching and scoring algorithm is operable for assessing a similarity between a signal data type of the vehicle signal identifier and a signal data type of the specification signal identifier using a data structure matching algorithm,
and/or
wherein the matching and scoring algorithm is operable for weighting mapping results associated with each of the multiple attributes of the vehicle signal identifier and the specification signal identifier.
